# EUROPÄISCHE PATENTSCHRIFT

(11) **EP 2 146 926 B1**
(45) Veröffentlichungstag und Bekanntmachung des Hinweises auf die Patenterteilung: **02.01.2013**
(21) Anmeldenummer: 08750240.7
(22) Anmeldetag: 09.05.2008
(51) Int. Cl.: C01B 3/46

(54) **VERFAHREN ZUR HERSTELLUNG VON SYNTHESEGAS**
METHOD FOR PRODUCING SYNTHESIS GAS
PROCÉDÉ DE FABRICATION DE GAZ DE SYNTHÈSE

(30) Priorität: 11.05.2007 DE 102007022723
(43) Veröffentlichungstag der Anmeldung: 27.01.2010
(73) Patentinhaber: BASF SE, 67056 Ludwigshafen (DE)
(72) Erfinder: SCHUNK, Stephan, 69117 Heidelberg (DE); LANGE DE OLIVEIRA, Armin, 68165 Mannheim (DE)
(86) Internationale Anmeldenummer: PCT/EP2008/055770
(87) Internationale Veröffentlichungsnummer: WO 2008/138899

(56) Entgegenhaltungen:
- EP-A- 0 137 467
- DE-A1- 3 933 285
- US-A- 4 668 494
- US-A- 4 756 806

## Beschreibung

Die vorliegende Erfindung betrifft ein kontinuierlich betriebenes Verfahren zur Verarbeitung von Kohlenwasserstoffen zu chemischen Wertprodukten beziehungsweise flüssigen Treibstoffen. Als Kohlenwasserstoffe werden bevorzugt Methan, Erdgas oder Biogas eingesetzt. Bei dem Verfahren wird auch Kohlendioxid, welches aus stationären oder nicht stationären Anlagen stammt, verwertet, wobei das Verfahren zum Teil auf dem Einsatz von regenerativen Energiequellen gestützt ist. In Ergänzung zum Einsatz von regenerativer Energiequellen wird das Verfahren mittels einer geeigneten Verfahrenssteuerung zum Teil auch durch die Nutzung von Prozessenergie betrieben, die bei einzelnen Prozessschritten als Wärmeenergie freigesetzt wird.

Das Verfahren betrifft auch die trockener Reformierung, das Steamreforming und die partielle Oxidation, wodurch ein definiertes Synthesegas gewonnen wird, das im Rahmen des Verfahrens (beispielsweise durch FT (Fischer Tropsch) - oder Methanol-Synthese) zu Wertprodukten umgewandelt wird. Im Fall der solargestützten Durchführung des Verfahrens werden während des Tagbetriebs überwiegend stark endotherm ablaufende Reaktionen durchgeführt und während des Nachtbetriebs überwiegend exotherm ablaufenden Reaktionen, wobei jedoch ein überschüssiger Anteil an während des Nachtbetriebs gewonnener Energie zur Aufrechterhaltung der endothermen Reaktionen genutzt wird. Durch die kombinierte Nutzung einer regenerativen Energiequelle und der während des Prozesses gebildeten Energie kann das Verfahren sehr energieeffizient durchgeführt werden, das bedeutet, dass im Rahmen des Verfahrens die Erzeugung von Kohlendioxid minimiert ist.

Eine Verwertung von Kohlendioxid als Ausgangsstoff in chemischen Prozessen ist in vielen Fällen sehr ungünstig, da Kohlendioxid eine äußerst inerte Verbindung ist und eine hohe energetische Barriere zu überwinden ist, um Kohlendioxid zur Reaktion zu bringen. Üblicherweise wird das bei der Energiegewinnung oder das bei chemischen Prozessen erzeugte Kohlendioxid als Abfallprodukt angesehen und in die Atmosphäre emittiert. Die Emission von Kohlendioxid in die Atmosphäre, wie sie beispielsweise durch die Verbrennung von fossilen Brennstoffen in stationären (wie z. B. Kraftwerken) oder instationären Anlagen (wie z. B. Automobilen) erfolgt, ist aufgrund der Eigenschaften des Kohlendioxids als Treibhausgas und dessen Beitrag zum globalen Klimawandel äußerst unerwünscht. Die Minimierung der Emission von Kohlendioxid in die Atmosphäre ist ein wesentliches Ziel, um die negativen Auswirkungen des Klimawandels zu reduzieren beziehungsweise zu verhindern.

Es existieren bereits Verfahren zur Verhinderung beziehungsweise Verminderung der Emission von Kohlendioxid in die Atmosphäre. Ein Teil dieser Verfahren bezieht sich auf die Sequestierung von Kohlendioxid in subterranen oder submarinen Lagerstätten (s.a. G. A. Olah, A. Goeppert, G.K. Surya Parkash; Beyond Oil ans Gas: The Methanol Economy; Wiley-VCH (2006) Chapter 7, p. 82). Derartige Verfahren sind jedoch bezüglich der gesamtenergetischen Bilanz als ungünstig zu bewerten, da eine Zuführung von Kohlendioxid in Lagerstätten nur unter Aufwendung von Energie durchgeführt werden kann, wodurch weiteres Kohlendioxid erzeugt wird. Davon abgesehen sind die möglichen Auswirkungen, die die Einlagerung von Kohlendioxid in großen Mengen mit sich bringen können, weitgehend unbekannt.

Die Verwendung von regenerativen Energiequellen zur Durchführung von großtechnischen industriellen Prozessen, bei denen Kohlenwasserstoffe oder Kohlenstoff als Ausgangsstoffe eingesetzt werden, ist bekannt.

Die DE 3933285 offenbart ein Verfahren zur kontinuierlichen Erzeugung von Synthesegas durch die solare Reformierung von Methan, wobei der Nachtzyklus mittels einer Hilfsfeuerung unter Einsatz von Methan betrieben wird und das dabei entstehende Kohlendioxid für die CO₂-Reformierung zwischengespeichert wird. Eine Kopplung des Verfahrens mit Steamreforming wird nicht erwähnt. Bei dem Verfahren wird lediglich ein Synthesegas mit einem sehr hohen Kohlenmonoxidgehalt erhalten. Die Nutzung von freigesetzter Reaktionswärme, die bei der partiellen Oxidation von Methan oder bei der nachfolgenden Umsetzung des Synthesegases entsteht, wird nicht beschrieben.

Solar betriebene Vergasungsanlagen für Kohle sind beispielsweise aus der US 4,229,184 bekannt, wobei bei der Vergasung von Kohle ein Produktgas erhalten wird, das einen hohen Anteil an Kohlenmonoxid aufweist. Darüber hinaus ist in der US 4,229,184 auch keine Lösung dafür gegeben, wie die Kohlevergasungsanlage in einem kontinuierlichen Betrieb, d.h. einem Wechsel zwischen Tag- und Nachtbetrieb, genutzt werden kann.

Die US 4,668,494 offenbart ein Verfahren zur chemischen Synthese, das die Steamreformierung von Kohlenwasserstoffen oder Vergasung von kohlenstoffhaltigen Brennstoffen betrifft und unter Nutzung von solarer Energie betrieben werden kann. Die solare Energie wird zur Herstellung eines CO-freien Ammoniaksynthesegases genutzt, das in der Betriebsphase der Anlage, in der keine Sonneneinstrahlung verfügbar ist, zur Energieerzeugung verbrannt werden kann, um den Prozess aufrechtzuerhalten. Bei dem Verfahren entstehen stickoxidhaltige Verbrennungsprodukte, die als Salpetersäure aufgefangen werden müssen.

Die US 6,670,058 und die US 7,033,570 offenbaren die Nutzung von Solarenergie zur thermischen Zersetzung von Kohlenwasserstoffen zur Herstellung von Wasserstoff, wobei Kohlenstoff als Nebenprodukt entsteht. Derartige Verfahren haben den Vorteil, dass bei der Herstellung von Wasserstoffen aus fossilen Quellen nur sehr geringe Mengen an Kohlendioxid freigesetzt werden. Zu einer Nutzung des Verfahrens in einem kontinuierlichen Betrieb werden keine Hinweise gegeben.

Eine der Aufgaben der vorliegenden Erfindung war es, ein wirtschaftliches Verfahren zu entwickeln, um Kohlendioxid, das aus stationären Industrieanlagen oder instationären Anlagen wie beispielsweise Fahrzeugen stammt, zu Wertprodukten umzusetzen. Die Umsetzung des Kohlendioxids sollte möglichst auf der Basis von regenerativen Energiequellen vorgenommen werden und gleichzeitig in einen möglichst kontinuierlichem Prozess integriert werden.

Diese der Erfindung zugrunde liegende Aufgabe und weitere Aufgaben konnten dadurch gelöst werden, dass ein Verfahren gemäß den Ansprüchen 1 bis 11 entwickelt wurde, in dem die Reaktionen trockene Reformierung, Steamreformierung und partielle Oxidation kombiniert werden, wobei die endothermen Schritte mittels oder unter Zuhilfenahme regenerativer Energiequellen betrieben werden. In einer bevorzugten Ausführungsform besteht die regenegative Energiequelle aus Solarenergie.

Das Verfahren weist mehrere unterschiedliche Betriebszustände auf, die im wesentlichen aus dem im Wechsel zueinander stehenden (i) Tagesbetrieb und (ii) Nachtbetrieb bestehen, wobei der Tagesbetrieb hauptsächlich die trockene Reformierung und das Steamreforming unter der Zuführung von regenerativer Energie und der Nachtbetrieb (ii) hauptsächlich die partielle Oxidation von Kohlenwasserstoffen umfasst. In einer bevorzugten Ausführungsform schließt das Verfahren die Umsetzung des hergestellten Synthesegases zu Wertprodukten ein, wobei die dabei generierte Reaktionswärme teilweise auch zur Durchführung der endothermen Verfahrensschritte verwendet wird.

Die Begriffe Tagesbetrieb und Nachtbetrieb beziehen sich auf den Verfahrensbetrieb in Verbindung mit regenerativen Energiequellen (wie beispielsweise Wind oder Sonne), die nur in bestimmten Zeitabschnitten zur Verfügung stehen, wobei während des Tagesbetriebs die regenerative Energiequelle in der Regel verfügbar ist. Es ist in keiner Weise ausgeschlossen, dass auch Betriebszustände auftreten, die einen Zwischenzustand zwischen dem Tagesbetrieb und dem Nachtbetrieb bilden, falls die Verfügbarkeit einer Energiequelle während des Tagesbetriebs nicht in vollem Umfang erfolgt.

In einer bevorzugten Ausführungsform des Verfahren werden die Verfahrensschritte trockene Reformierung von Kohlendioxid, Steamreforming und partielle Oxidation mit kurzkettigen Kohlenwasserstoffverbindungen mit weniger als fünf Kohlenstoffatomen und vorzugsweise mit weniger als drei Kohlenstoffatomen durchgeführt.

In einer weiter bevorzugten Ausführungsform des Verfahrens werden die Reaktionen trockene Reformierung von Kohlendioxid, Steamreformierung und partielle Oxidation mit Gasmischungen durchgeführt, die mehrere Kohlenwasserstoffverbindungen enthalten, die einen sehr hohen Methangehalt aufweisen. Hierdurch ist es möglich bei dem Verfahren, das mehrere Betriebszustände umfassen kann, ein Synthesegas herzustellen, das eine definierte Gesamtzusammensetzung hinsichtlich des Kohlenmonoxid zu Wasserstoffgehaltes aufweist. Die am meisten bevorzugte Zusammensetzung des Synthesegases besitzt einen Kohlenmonoxid zu Wasserstoffgehalt von 1 zu 2 (CO/H₂ gleich 1 : 2), da ein derartig zusammengesetztes Synthesegas eine geeignete Ausgangsbasis zur Herstellung von Wertprodukten darstellt.

In einer bevorzugten Verfahrensvariante wird das Verfahren unter Nutzung solarer Energiequellen vorgenommen. Daraus resultiert ein ausgeprägte Differenzierung zwischen den Betriebszuständen Tagesbetrieb und Nachtbetrieb. Während des Tagesbetriebs werden bevorzugt die stark endothermen Reaktionen, trockene Reformierung und Steamreformierung, vorgenommen und während des Nachtbetriebs wird bevorzugt die partielle Oxidation vorgenommen, die exotherm abläuft. Die exotherm ablaufende Reaktion kann zum Teil auch in der Weise durchgeführt wird, dass die freigesetzte Wärme zum Betrieb der endothermen Reaktionen genutzt werden kann. Zur Prozessunterstützung im Nachtbetrieb oder während der Betriebsphase, in der nicht genug Solarenergie zur Verfügung steht, wird zwischengespeicherter Wasserstoffüberschuss verbrannt oder zwischengespeicherte Energie für den Prozess genutzt. Somit ist es während des Nachtbetriebs auch möglich, in einem geringen Umfang auch endotherme Reaktionen durchzuführen.

Beim Einsatz von solarer Energie als regenerativer Energiequelle wird das erfindungsgemäße Verfahren bevorzugt in einer Region betrieben, in der das gesamte Jahr über solare Energie in ausreichender Menge zur Verfügung steht. In Verbindung mit solarer Energie bedeuten die Begriffe Tagesbetrieb (Betrieb in den Stunden mit für den Prozessbetrieb ausreichender Sonneneinstrahlung) und Nachtbetrieb (Betrieb in den Stunden mit für den Prozessbetrieb nicht ausreichender Sonneneinstrahlung) auch, dass die unterschiedlichen Betriebsphasen bevorzugt innerhalb eines vierundzwanzig Stunden dauernden Tages erfolgen.

Das gleiche hinsichtlich der Energiebilanz gilt auch für die Umsetzung des Synthesegases zu Wertprodukten, da es sich bei Fischer-Tropsch-Reaktionen oder Methanolsynthese aus Synthesegas um exotherme Prozesse handelt. Die bei der Umsetzung von Synthesegas gewonnene Energie steht im Rahmen des erfindungsgemäßen Prozesses sowohl während des Tagesbetriebs als auch während des Nachtbetriebs zur Verfügung.

In einer weiter bevorzugten Ausführungsform wird das Verfahren in der Weise durchgeführt, dass das Synthesegas die gewünschte Zusammensetzung aufweist, damit dieses in der weiteren Verfahrensstufe zu Wertprodukten umgesetzt werden kann. Falls es bei der Verfahrensdurchführung Betriebsphasen geben sollte, in denen ein Synthesegas mit einer Zusammensetzung hergestellt wird, die nicht die für die Weiterverarbeitung gewünschte Zusammensetzung hinsichtlich Kohlenmonoxid zu Wasserstoff entsprechen sollte, dann kann dies zunächst in einem Speichertank zwischengelagert werden. Durch die Erhöhung des Beitrages am Steamreforming gegenüber der trockenen Reformierung wird dem Speichertank ein wasserstoffreiches zugeführt, bis das Synthesegas die gewünschten Verhältnisse zwischen Kohlenmonoxid und Wasserstoff aufweist.

Beispielsweise werden während des Tagesbetriebs und bei Verwendung von Methan als eingesetzter Kohlenwasserstoffverbindung drei Mol an Methan benötigt, um ein Mol Kohlendioxid umzusetzen, wenn eine Kombination aus trockener Reformierung und Steamreforming durchgeführt wird. Hinsichtlich der Kohlenstoffbilanz bedeutet dies, dass - während des Tagesbetriebs - ein Viertel des zu Synthesegas umgesetzten Kohlenstoffs aus dem zugeführten Kohlendioxid besteht. Falls der Betriebszustand von Tages- und Nachtbetrieb die gleiche Zeitdauer und den gleichen Stoffumsatz aufweisen, dann ergibt die Kohlenstoffbilanz, dass ein Achtel des zu Synthesegas verarbeiteten Kohlenwasserstoffs aus dem Kohlendioxid gebildet wurde. Für den Umsatz von einem Mol an Kohlendioxid im Sinne der erfindungsgemäßen Prozesse müssen also sieben Mol an Methan eingesetzt werden.

Einige der Verfahren, die die chemische Umsetzung von Kohlendioxid betreffen, beschreiben die so genannte trockene Reformierung unter Verwendung von Kohlendioxid. Bei der trockenen Reformierung unter Verwendung von Kohlendioxid wird dieses bei hohen Temperaturen mit reduktiv wirkenden Spezies in Gegenwart eines Katalysators in Kontakt gebracht. Bei den reduktiv wirkenden Spezies handelt es sich um Kohlenwasserstoffe wie Methan, Ethan, Propan oder andere Kohlenwasserstoffe, die bei Normalbedingungen in gasförmiger, flüssiger oder fester Form vorliegen, oder um wasserstoffreiche Gase - wie wasserstoffreiches Synthesegas - oder Wasserstoff in reiner Form. Ziel dieser Reaktionen ist es dabei, das Kohlendioxid zu Kohlenmonoxid zu reduzieren.

Beispielhaft sollen hier einige Umsetzungen von Reagenzien mit Kohlendioxid aufgeführt werden. Bei Verwendung von Wasserstoff als reduktiv wirkender Spezies entsteht aufgrund der vorliegenden stöchiometrischen Verhältnisse ein Mol Wasser pro Mol erzeugtem Kohlenmonoxid. Bei Umsetzung von Kohlendioxid mit Methan entstehen zwei Mol Kohlenmonoxid und zwei Mol Wasserstoff, also ein Synthesegas mit dem Kohlenmonoxid- zu Wasserstoffverhältnis von 1 zu 1 (CO/H₂ gleich 1:1). Bei der Umsetzung von zwei Mol Kohlendioxid mit Ethan entstehen vier Mol Kohlenmonoxid und drei Mol Wasserstoff, also ein Synthesegas mit dem Kohlenmonoxid- zu Wasserstoffverhältnis von 4 zu 3 (CO/H₂ gleich 4 : 3). Bei der Umsetzung von drei Mol Kohlendioxid mit einem Mol Propan entstehen 6 Mol Kohlenmonoxid und 4 Mol Wasserstoff, also ein Synthesegas mit dem Kohlenmonoxid zu Wasserstoffverhältnis von 3 zu 2 (CO/H₂ gleich 3 : 2). Bei der Umsetzung von vier Mol Kohlendioxid mit einem Mol Butan entstehen 8 Mol Kohlenmonoxid und 5 Mol Wasserstoff, also ein Synthesegas mit dem Kohlenmonoxid- zu Wasserstoffverhältnis von 8 zu 5 (CO/H₂ gleich 8 : 5).

Die Beispiele zeigen, dass die vollständige trockene Reformierung von Kohlendioxid mit linearen Alkanen der allgemeinen Formel folgt:

n CO₂ + CₙH₂ₙ₊₂ → 2n CO + (n+1) H₂

Die Reaktionsenthalpie der Reaktion ist stark endotherm, es muss also Energie zur Durchführung der Reaktion zugeführt werden.

Da bei der trockenen Reformierung ein wasserstoffarmes Synthesegas entsteht, ist ein derartiges Synthesegas nicht gut geeignet für die Umsetzung in einem Verfahren zur Erzeugung von langkettigen paraffinischen Kohlenwasserstoffen wie Diesel, Benzin oder Wachsen nach Fischer-Tropsch oder der Umsetzung zu Methanol oder Dimethylether. Um ein möglichst wasserstoffreiches Synthesegas herzustellen, ist die Verwendung von kurzkettigen Kohlenwasserstoffen zu bevorzugen. Da der niedrige Wasserstoffanteil des so hergestellten Synthesegases eine weitere Verwendung erschwert, bietet sich eine Anreicherung des kohlenmonoxidreichen Synthesegases an.

Grundsätzlich sind Verfahren zur Herstellung von wasserstoffreichen Synthesegasen bekannt. Beispielsweise kann wasserstoffreiches Synthesegas durch Steamreforming von Kohlenwasserstoffen wie Methan oder höheren Kohlenwasserstoffen in der Gegenwart von Wasserdampf erfolgen. Für Methan ergibt sich die Reaktionsgleichung:

CH₄ + H₂O → CO + 3H₂

Die Reaktionsenthalpie der Reaktion ist stark endotherm, es muss also Energie zur Durchführung der Reaktion zugeführt werden.

Es zeigt sich klar, dass hier im Gegensatz zur trockenen Reformierung unter Verwendung von Kohlendioxid ein wasserstoffreiches Synthesegas erhalten wird. Beim Steamreforming von Methan wird ein Synthesegas mit einem Verhältnis von Kohlenmonoxid zu Wasserstoff von 1 zu 3 (CO/H₂ gleich 1 : 3) erhalten. Beim Steamreforming von Ethan wird ein Synthesegas mit einem Verhältnis von Kohlenmonoxid zu Wasserstoff von 2 zu 5 (CO/H₂ gleich 2 : 5) erhalten. Beim Steamreforming von Propan wird ein Synthesegas mit einem Verhältnis von Kohlenmonoxid zu Wasserstoff von 3 zu 7 (CO/H₂ gleich 3 : 7) erhalten. Beim Steamreforming von Butan wird ein Synthesegas mit einem Verhältnis von Kohlenmonoxid zu Wasserstoff von 4 zu 9 (CO/H₂ gleich 4 : 9) erhalten.

Das Steamreforming von Alkanen wird durch die folgende Formel allgemein beschrieben:

CₙH₂ₙ₊₂ + n H₂O → n CO + (2n+1) H₂

Wie anhand der Stöchiometrien der Reaktionsgleichungen ersichtlich ist, kann eine Kopplung von Verfahren zur Herstellung von wasserstoffreichem Synthesegas wie dem Steamreforming mit der trocknen Reformierung unter Verwendung von Kohlendioxid sinnvoll sein, um ein Synthesegas mit einer Stöchiometrie von Kohlenmonoxid zu Wasserstoff von 1 zu 2 (CO/H₂ gleich 1 : 2) herzustellen. Ein solches Synthesegas kann zum Beispiel zur Herstellung von Chemikalien - wie beispielsweise Methanol oder Dieselfraktionen - verwendet werden.

Erfindungsgemäß kann eine solche Kopplung von beiden Verfahren, d.h. dem Steamreforming und der trockenen Reformierung, durch eine Kopplung von geeigneten Reaktorsystemen jeweils mit Hilfe von einem oder mehreren Katalysatorsystemen, die parallel betrieben werden und die so ausgelegt beziehungsweise dimensioniert sind, dass die Stöchiometrie des Synthesegases im gewünschten Verhältnis eingestellt werden kann. Eine weitere erfindungsgemäße Möglichkeit ist die Verwendung eines einzigen Reaktorsystems, in dem die trockene Reformierung und das Steamreforming gleichzeitig oder abwechselnd mit Hilfe von einem oder mehreren Katalysatorsystemen durchgeführt werden, wobei auch ein Synthesegas mit einem gewünschten Verhältnis von Kohlenmonoxid und Wasserstoff eingestellt und erhalten werden kann.

Ein weitere Methode zur Herstellung von wasserstoffreichem Synthesegas ist die partielle Oxidation von Alkanen. Hierbei wird das Alkan mit Sauerstoff umgesetzt, beispielhaft ist für die Umsetzung von Methan die Reaktionsgleichung der exothermen Reaktion angegeben:

CH₄ + 1/2 O₂ → CO + 2H₂

Durch diese Reaktion von Methan und Sauerstoff kann ein Synthesegas mit einer bevorzugten Stöchiometrie im Sinne der vorliegenden Erfindung erzeugt werden, d.h. einem Verhältnis von Kohlenmonoxid zu Wasserstoff von 1 zu 2 (CO/H₂ gleich 1 : 2), zur Weiterverwertung in beispielsweise der Erzeugung von Methanol oder Dieselfraktion nach dem Fischer-Tropsch-Verfahren.

Sowohl die technische Durchführung von Verfahren zur trockenen Reformierung als auch geeignete Katalysatoren zur Durchführung des Verfahren sind bekannt. Ungünstig ist der endotherme Charakter des Verfahrens. Die hohen Temperaturen, die für die Umsetzung notwendig sind, können durch die Verbrennung von fossilen Brennstoffen erzeugt werden. Dies ist aber äußerst nachteilig, da durch die Verbrennung der fossilen Brennstoffe wieder Kohlendioxid entsteht. Dies gilt ebenfalls für das Verfahren des Steamreforming.

Für die Durchführung des erfindungsgemäßen Verfahrens ist die Verwendung von Wärme- oder Energiequellen zu bevorzugen, die keine oder vernachlässigbare Kohlendioxidemission verursachen. Solche Wärme- oder Energiequellen sind bekannt und können zum Beispiel folgende sein: Wasser-, Wellen- und Gezeitenkraftwerke, nuklearbetriebene Wärmequellen, geo-thermische Wärmequellen, solare Wärmequellen, Wärmequellen, die durch chemische Reaktionen betrieben werden, die kein Kohlendioxid erzeugen - wie zum Beispiel durch die Verbrennung von Wasserstoff.

In einer bevorzugten Ausführungsform wird das erfindungsgemäße Verfahren unter Einbezug von solarer Energie durchgeführt, da mittels solarer Energie ausreichend hohe Temperaturen für die Durchführung der chemischen Reaktionen und einzelnen Verfahrensschritte bereitgestellt werden können.

Bei den oben beschriebenen Verfahren zur trockenen Reformierung unter Verwendung solarer Energie ist der Nachteil zu erkennen, dass durch die alleinige Verwendung der solaren Wärmequelle ausschließlich eine Nutzung des Verfahrens bei Tag während der Stunden mit ausreichender Sonneneinstrahlung möglich ist. Dies ist ein großer Nachteil des vorliegenden Verfahrens, da hierdurch die Verwendung eines solchen Verfahrens im Vierundzwanzigstunden-Betrieb nicht möglich ist.

Durch die Kopplung mit der exothermen Reaktion der Partialoxidation von Alkanen zu wasserstoffreichem Synthesegas kann aber ein Nachtbetrieb zur Herstellung von wasserstoffreichem Synthesegas sichergestellt werden. Ebenso kann dieser Nachtbetrieb durch die Befeuerung mit zwischengespeichertem Wasserstoff erfolgen.

In dem erfindungsgemäßen Verfahren wird das generierte Synthesegas der Herstellung von beispielsweise Dimethylether, Methanol, langkettigen Kohlenwasserstoffen (beispielsweise mit der Formel (CH₂)ₙH₂) und/oder cyclischen Kohlenwasserstoffen (beispielsweise der Formel (CH₂)ₙ) im Bereich von C₆ bis C₆₀, sowie zur Herstellung von Olefinen mit einer oder mehreren konjugierten und oder nicht konjugierten C=C-Doppelbindungen sowie Aromaten wie beispielsweise Benzol, Toluol, Xylolen, Ethylbenzol, Styrol, Naphthalen. Beispielhaft sind in diesem Zusammenhang auch Ethylen, Propylen, Butene, Butadien, Cyclo-Hexen zu nennen. Auch die Herstellung von Chemikalien die Heteroatome enthalten wie Alkohole, Ketone oder organische Säuren ist im Verfahren beinhaltet.

Auch die Herstellung von Gemischen oder die parallele Herstellung solcher oben genannter Komponenten entspricht dem erfindungsgemäßen Verfahren. Falls bei einzelnen Prozessschritten des Verfahrens mehr Wasserstoff erzeugt wird, als zur Herstellung der oben genannten Komponenten erforderlich ist, dann wird dieser nicht benötigte Wasserstoff separiert und gespeichert. Der gespeicherte Wasserstoff kann dadurch genutzt werden, indem er dem Prozess während der Stunden mit nicht ausreichender Sonneneinstrahlung beispielsweise in der folgenden Weise zugeführt wird:
1) dem Verfahren der trockenen Reformierung von Kohlendioxid thermische Energie durch Verbrennung von Wasserstoff zuzuführen,
2) Kohlendioxid direkt mit dem Wasserstoff zur Reaktion zu bringen,
3) die Stöchiometrie des bei der trockenen Reformierung entstehenden Synthesegases zugunsten wasserstoffreicherer Gemische anzupassen.

Neben der Gewinnung des Synthesegases aus der trockenen Reformierung von Kohlendioxid kann das Synthesegas auch durch die partielle Oxidation von Erdgas oder anderer paraffinischer Gase nach der allgemeinen Formel hergestellt werden:

CₙH₂ₙ+₂ + n/2 O₂ → n CO + n+1 H₂

Da die oben beschriebene Reaktion der partiellen Oxidation exotherm ist, ist eine zusätzliche Zuführung von Energie nicht notwendig. Die Reaktion der partiellen Oxidation stellt also eine Möglichkeit zur Herstellung von wasserstoffreichem Synthesegas während der Zeit dar, in der keine oder keine ausreichende Sonneneinstrahlung zur Verfügung steht.

Während der Zeit mit ausreichender Sonneneinstrahlung, die im Rahmen der vorliegenden Schrift als Tagbetrieb bezeichnet wird, kann die trockene Reformierung von Kohlendioxid und das Steamreforming in einem kombinierten Reaktorsystem oder mehreren separaten Reaktorsystemen durchgeführt werden, wobei diese Reaktoren mit solarer Energie gespeist werden. Die solare Energie kann dabei direkt als Strahlungsenergie zur Heizung des Reaktors verwendet werden oder mittels Medien wie Gasen, Flüssigkeiten oder Schmelzen von beispielsweise Salzen oder Metallen zugeführt werden, die unter Verwendung solarer Energie erhitzt wurden.

Das entstehende Synthesegas kann dann einem Prozess zur Herstellung der oben genannten Wertprodukte, wie beispielsweise Dimethylether, Methanol, langkettigen Kohlenwasserstoffen mit beispielsweise der Formel (CH₂)ₙH₂ und/oder cyclischen Kohlenwasserstoffen mit beispielsweise der Formel (CH₂)ₙ im Bereich von C₆ bis C₆₀, zur Herstellung von Olefinen mit einer oder mehreren konjugierten und/oder nicht konjugierten C=C-Doppelbindungen, wie beispielsweise Ethylen, Propylen, Butene, Butadien, Cyclo-Hexen, zur Herstellung von Aromaten, wie beispielsweise Benzol, Toluol, Xylolen, Ethylbenzol, Styrol, Naphthalen, zugeführt werden. Auch die Herstellung von Chemikalien, die Heteroatome enthalten wie Alkohole, Ketone oder organische Säuren, ist im Verfahren beinhaltet.

Zur Erhöhung der Anlagenkapazität des beispielsweise Paraffine erzeugenden Prozesses kann auch Synthesegas geeigneter Stöchiometrie aus anderen Quellen als der trockenen Reformierung verwendet werden. Bevorzugt sind solche Prozesse und Quellen, bei denen ein Überschuss an Wasserstoff im Verhältnis zum Kohlenmonoxid besteht. Dieser Wasserstoff wird nicht für die z. B. paraffinische Wertproduktherstellung benötigt und kann aus dem Prozess ausgeschleust und gespeichert werden. Beispiel für eine solche Herstellung von Synthesegas ist unter anderem die partielle Oxidation von Paraffinen nach der Formel:

CₙH₂ₙ+₂ + n/2 O₂ → n CO + (n+1) H₂

Während der Zeit mit nicht ausreichender Sonneinstrahlung kann zum Betrieb der trockenen Reformierung und des Steamreforming ebenfalls eine alternative Wärmequelle gefunden werden. Nach dem erfindungsgemäßen Verfahren können zur Überbrückung in der Zeit fehlender Sonneneinstrahlung brennbare Gase wie zum Beispiel Wasserstoff aus dem Überschuss von Synthesegasen geeigneter Stöchiometrie aus anderen Quellen als der trockenen Reformierung oder der partiellen Oxidation verwendet werden. Bevorzugt stammt der Wasserstoff aus solchen Prozessen und Quellen, bei denen bei der Synthesegasherstellung ein Überschuss an Wasserstoff im Verhältnis zum Kohlenmonoxid besteht.

Dieser Wasserstoff wird, wie oben beschrieben, nicht für die Herstellung paraffinischer Wertprodukte benötigt und kann aus dem Prozess ausgeschleust und gespeichert werden. Dieser Wasserstoff kann für die kohlendioxidneutrale Wärmeherstellung oder direkte Beheizung des Reaktors zur trockenen Reformierung von Kohlendioxid verwendet werden. In alternativen Szenarien kann der Wasserstoff direkt zur Reduktion von Kohlendioxid unter Entstehung von Kohlenmonoxid und Wasser verwendet werden. Dadurch kann die trockene Reformierung auch in den Stunden mit nicht ausreichender Sonneinstrahlung betrieben werden, ohne dass hierbei fossile Energie zur Aufrechterhaltung des Prozesses benötigt wird.

Das gewonnene Synthesegas wird zur Herstellung von Wertprodukten eingesetzt. Die hierbei eingesetzten Prozesse eignen sich zur Herstellung von Produkten wie beispielsweise Dimethylether, Methanol, langkettigen Kohlenwasserstoffen (beispielsweise mit der Formel (CH₂)ₙH₂) und/oder cyclischen Kohlenwasserstoffen (beispielsweise mit der Formel (CH₂)ₙ) im Bereich von C₆ bis C₆₀, sowie zur Herstellung von Olefinen, die auch eine oder mehrere Doppelbindungen enthalten können, wobei die eine oder die mehreren C=C-Doppelbindungen konjugiert oder nicht konjugiert sein können, sowie zur Herstellung von Aromaten wie beispielsweise Benzol, Toluol, Xylolen, Ethylbenzol, Styrol, Naphthalen. Als Beispiele für die Herstellung von Olefinen sind unter anderem auch Ethylen, Propylen, Butene, Butadien, Cyclo-Hexen zu nennen. Auch die Herstellung von Chemikalien, die Heteroatome enthalten wie Alkohole, Ketone oder organische Säuren, ist im Verfahren beeinhaltet.

In einer bevorzugten Ausführungsform des Verfahrens werden während des Nachtbetriebs auch regenerative Energiequellen zur Durchführung der trockenen Reformierung von Kohlendioxid und des Steamreforming eingesetzt. Beispielsweise kann Energie genutzt werden, die aus geothermalen Quellen oder nuklearen Quellen stammt, beziehungsweise auch Energie, die mittels Wasser- oder Windkraft erzeugt wird. In einer weiter bevorzugen Ausführungsform des Verfahrens wird die trockene Reformierung und das Steamreforming während des Nachtbetriebs mit Energie durchgeführt, die auf der Basis chemischer Reaktionen erzeugt wird.

Das erfindungsgemäße Verfahren enthält nach der obigen Beschreibung drei oder mehr chemische Teilreaktionen, die in getrennten oder gemeinsamen Reaktoren durchgeführt werden. Die drei Teilreaktionen sind im Einzelnen:

Die trockene Reformierung von Kohlendioxid nach der Reaktionsgleichung (1):

(1) CO₂ + CH₄ → 2CO + 2H₂

Das Steamreforming nach der Reaktionsgleichung (2):

(2) CH₄ + H₂O → CO + 3H₂

Die Reaktionsenthalpie für die Reaktion (1) beträgt + 248 kJ/mol und für (2) + 206 kJ/mol. Damit sind die pro Methaneinheit aufzuwendenden Energien ähnlich, wohingegen pro Wasserstoffeinheit wesentlich verschiedene Energien aufzuwenden sind.

Der partiellen Oxidation von Methan mit Luft oder Sauerstoff (3):

(3) CH₄ + 1/2 O₂ → CO + 2H₂

Die Reaktionsenthalpie von (3) ist gering exotherm mit - 35.6 kJ/mol.

Eine Alternative zu (3) ist die Reaktion:

(4) 3 CH₄ + O₂ + H₂O → 3 CO + 7 H₂

Diese Reaktion wird im Zusammenhang mit der Erfindung als äquivalent zu Reaktion (3) behandelt, wobei es sich bei Reaktion um eine Kombination der Reaktionen (3) und (2) handelt.

Die Reaktionen (1), (2) und (3) sind hier beispielhaft mit Methan als Kohlenwasserstoff ausgeführt. Dem Fachmann ist bekannt und ersichtlich, dass sich diese Reaktionen (1), (2) und (3) auch mit anderen gesättigten oder ungesättigten höheren Kohlenwasserstoffen oder deren Gemische durchführen lassen. Die Stöchiometrien der Reaktionsgleichungen müssen entsprechend angepasst werden. Dem Fachmann ist ebenfalls bekannt, dass durch die Verwendung von gesättigten oder ungesättigten höheren Kohlenwasserstoffen sowie deren Gemischen ein ungünstigeres CO/H₂-Verhältnis erhalten wird als bei der Verwendung von Methan.

Im Rahmen der Erfindung ist die Verwendung von Methan bevorzugt. Ebenfalls bevorzugt ist die Verwendung von Gemischen die Methan und höheren Kohlenwasserstoffen, bei denen es sich um gesättigte, ungesättigte oder Mischungen aus gesättigten Kohlenwasserstoffen handeln kann, wobei der Methananteil höher als 70% liegt. insbesondere sind solche Gemische bevorzugt, bei denen der Methananteil über 85% liegt.

In einer bevorzugten Verfahrensvariante wird Reaktion (1) in Gegenwart von Wasser durchgeführt, um eine Koksbildung des Katalysatorsystems zu verhindern oder zu verlangsamen. Es ist ebenfalls bevorzugt, dass die für Reaktion (1) benötigte Energie unter Verwendung der folgenden Quellen gewonnen wird: solare Energie, Kernenergie, geothermale Energie, Windenergie, Wasserkraft, wie Gezeitenkraft oder Kraft aus Wasserkraftwerken.

Als bevorzugte Katalysatorsysteme für die Reaktion (1) eignen sich Mischmetalloxide, wie beispielsweise Perovskite, Spinelle oder andere Mischoxide von Neben- oder Hauptgruppenelementen, sowie geträgerte Metalle und Metalloxide. Als Metalle eignen sich beispielsweise diejenigen der Eisen- und Platingruppe oder der Gruppe der Münzmetalle und als Metalloxide, Mischmetalloxide und gemischte Metalloxide eignen sich beispielsweise Übergangsmetalloxide und Hautgruppenmetalloxide, insbesondere eignen sich Elemente der Gruppe VIIIb (wie Ni, Rh, Ru). Geeignete Trägeroxide sind beispielsweise Oxide der Gruppe IVb, Aluminiuoxid, Siliciumoxid, Spinelle, Perovskite, Aluminate, Silikate, Carbide und Nitride, wobei bevorzugte Trägeroxide auch Titanoxid und/oder Zirkonoxid enthalten. Es sind insbesondere solche Trägersysteme bevorzugt, die ein Sintern und Verkoken der Aktivkomponente verhindern und eine hinreichende Wasserdampfstabilität aufweisen.

Es ist ebenfalls bevorzugt, dass die für Reaktion (2) benötigte Energie unter Verwendung der folgenden Quellen gewonnen wird: solare Energie, Kernenergie, geothermale Energie, Windenergie, Wasserkraft, wie Gezeitenkraft oder Kraft aus Wasserkraftwerken.

Als bevorzugte Katalysatorsysteme für die Reaktion (2) eignen sich Mischmetalloxide, wie beispielsweise Perovskite, Spinelle oder andere Mischoxide von Neben- oder Hauptgruppenelementen, sowie geträgerte Metalle, Metalloxide, Mischmetalloxide und gemischte Metalloxide. Als Metalle eignen sich beispielsweise diejenigen der Eisen- und Platingruppe oder der Gruppe der Münzmetalle und als Metalloxide, Mischmetalloxide und gemischte Metalloxide eignen sich beispielsweise Übergangsmetalloxide und Hautgruppenmetalloxide, insbesondere eignen sich Elemente der Gruppe VIIIb (wie Ni, Rh, Ru). Geeignete Trägeroxide sind beispielsweise Oxide der Gruppe IVb, Aluminiuoxid, Siliciumoxid, Spinelle, Perovskite, Aluminate, Silikate, Carbide und Nitride, wobei bevorzugte Trägeroxide auch Titanoxid und/oder Zirkonoxid enthalten. Es werden insbesondere solche Trägersysteme bevorzugt, die ein Sintern und Verkoken der Aktivkomponente verhindern und eine hinreichende Wasserdampfstabilität aufweisen.

In einer bevorzugten Verfahrensvariante werden die Reaktionen (1) und (2) in gekoppelten oder gemeinsamen Reaktorsystemen an einem oder mehreren Katalysatoren durchgeführt. Gekoppelte Reaktoren sind Reaktoren die in Reihe geschaltet sind. Unter einem gemeinsamen Reaktorsystem wird ein integriertes Reaktorsystem verstanden, wobei innerhalb dieses Reaktorsystemes Gradienten in Bezug auf Druck, Temperatur, Fluss und Reaktanden-Zusammensetzung realisiert sein können. Ebenfalls können auch mehr als ein Katalysatorsystem für die Umsetzungen im gemeinsamen Reaktorsystem eingesetzt werden.

In einer anderen und bevorzugten Ausführungsform werden die einzelnen Verfahrensschritte trockene Reformierung, Steamreformierung und partielle Oxidation in unterschiedlichen Reaktoren durchgeführt.

In wieder einer anderen und auch bevorzugen Ausführungsform werden zwei der drei Verfahrensschritte trockene Reformierung, Steamreformierung und partielle Oxidation in einem gemeinsamen Reaktor durchgeführt, wobei der gemeinsame Reaktor mit demjenigen Reaktor, in dem der dritte Verfahrensschritt vorgenommen wird, seriell oder parallel geschaltet ist.

Ein Vorteil des erfindungsgemäßen Verfahrens wird insbesondere dann geboten, wenn die Verfahrensschritte trockene Reformierung, Steamreformierung und partielle Oxidation in einem ähnlichen Temperaturbereich und bevorzugt bei der gleichen Temperatur durchgeführt werden. Falls die drei Reaktionen gemäß einer bevorzugten Ausführungsform des erfindungsgemäßen Verfahrens im selben Reaktor durchgeführt werden, dann kann von einer auf die andere Reaktion umgeschaltet werden, ohne dass zusätzliche Wärmeverluste durch Aufheizen oder Abkühlen entstehen. Hierdurch können Produktionsausfälle, die ansonsten während Abkühl- und Aufheizprozessen auftreten, weitgehend vermieden werden.

In einer bevorzugten Ausführungsform werden die Verfahrensschritte trockene Reformierung, Steamreformierung und partielle Oxidation in einem gemeinsamen Reaktor durchgeführt.

Es ist ebenfalls bevorzugt, dass die für die Reaktionen (1) und (2) benötigte Energie unter Verwendung der folgenden Quellen gewonnen wird: solare Energie, Kernenergie, geothermale Energie, Windenergie, Wasserkraft, wie Gezeitenkraft oder Kraft aus Wasserkraftwerken.

Eine gemeinsame Durchführung von Reaktion (1) und (2) unter Verwendung von Methan oder höheren Alkanen und unter der Randbedingung, ein besonders bevorzugtes Synthesegas mit einem Kohlenmonoxid zu Wasserstoffverhältnis von 1 zu 2 (CO/H₂ gleich 1 : 2) zu erhalten, folgt der allgemeinen Formel:

(5) CO₂ + (3n-1) H₂O + 3 CₙH₂ₙ₊₂ -> (3n+1) CO + (6n+2) H₂

Eine weiter bevorzugte Verfahrensvariante ist der Betrieb und die Auslegung der Reaktionen (1) und (2) in gekoppelten oder gemeinsamen Reaktorsystemen an einem oder mehreren Katalysatoren in der Form, dass ein Synthesegas mit dem CO/H₂-Verhältnis von 0,2 bis 0,8, besonders bevorzugt von 0,3 bis 0,7, ganz besonders bevorzugt von 0,4 bis 0,6, erhalten wird.

Als bevorzugte Katalysatorsysteme für die Verfahrensvariante der Reaktionen (1) und (2) in gekoppelten oder gemeinsamen Reaktorsystemen eignen sich Metalloxide Mischmetalloxide und gemischte Metalloxide, wie beispielsweise Perovskite, Spinelle oder andere Mischoxide von Neben- oder Hauptgruppenelementen, sowie geträgerte Metalle und Metalloxide. Geeignete Metalle sind beispielsweise solche der Eisen- und Platingruppe oder der Gruppe der Münzmetalle. Geeignete Metalloxide können beispielsweise Übergangsmetalloxide und Hautgruppenmetalloxide sein, insbesondere eignen sich Elemente der Gruppe VIIIb (wie Ni, Rh, Ru). Geeignete Trägeroxide sind beispielsweise Oxide der Gruppe IVb, Aluminiuoxid, Siliciumoxid, Spinelle, Perovskite, Aluminate, Silikate, Carbide und Nitride, wobei bevorzugte Trägeroxide auch Titanoxid und/oder Zirkonoxid enthalten. Es sind insbesondere solche Trägersysteme bevorzugt, die ein Sintern und Verkoken der Aktivkomponente verhindern und eine hinreichende Wasserdampfstabilität aufweisen.

In einer bevorzugten Verfahrensvariante werden die Reaktionen (1) und (2) unter Zufuhr von Energie durchgeführt, die aus solarer Quelle stammt, um die Reaktionen während der Zeit ausreichender Sonneneinstrahlung (d.h. dem Tagesbetrieb) zu betreiben. Während derjenigen Zeit, in der keine ausreichende Sonneneinstrahlung vorhanden ist (d.h. dem Nachtbetrieb), wird durch die Durchführung von Reaktion (3) ein Synthesegas gleicher oder ähnlicher Stöchiometrie zur Verfügung gestellt. In einer bevorzugten Verfahrensvariante kann die Abwärme für den Betrieb von Reaktion (3) im Tagesbetrieb genutzt oder gespeichert werden. In einer weiteren bevorzugten Verfahrensvariante kann die Abwärme aus dem Betrieb von Reaktion (3) für einen Teillastbetrieb von Reaktionen (1) und (2) während des Nachtbetriebs genutzt werden.

Als bevorzugte Katalysatorsysteme für die Reaktion (3) sind Mischmetalloxide wie beispielsweise Perovskite, Spinelle oder andere Mischoxide von Neben- oder Hauptgruppenelementen, sowie geträgerte Metalle und Metalloxide, Mischmetalloxide und gemischte Metalloxide geeignet. Geeignete Metalle sind beispielsweise solche der Eisen- und Platingruppe oder der Gruppe der Münzmetalle. Geeignete Metalloxide können beispielsweise frühe Übergangsmetalloxide und Hautgruppenmetalloxide sein. Geeignete Trägeroxide sind beispielsweise Oxide der Gruppe IVb, Aluminiuoxid, Siliciumoxid, Spinelle, Perovskite, Aluminate, Silikate, Carbide und Nitride, wobei bevorzugte Trägeroxide auch Titanoxid und/oder Zirkonoxid enthalten. Es sind insbesondere solche Trägersysteme bevorzugt, die ein Sintern und Verkoken der Aktivkomponente verhindern und eine hinreichende Wasserdampfstabilität aufweisen.

In einem weiteren bevorzugten Verfahrensschritt wird das durch die Reaktionen (1), (2) und (3) hergestellte Synthesegas zur Herstellung von Methanol, Dimethylether, Dimethylcarbonat, Kohlenwasserstoffen mit einem C-Anteil größer als C₆ (wie beispielsweise Wachse, Diesel, Kerosin oder Benzin) oder anderen flüssigen, festen oder gasförmigen Chemikalien verwendet, die als Kraftstoffe für mobile Anwendungen dienen können.

Dimensionierung des Sonnenkraftwerkes:

Im Fall des Einsatzes von Methan (n=1) resultiert für (5) eine endotherme Reaktionsenthalpie von 660 kJ/mol. Diese Reaktionsenthalpie kann als Grundlage der technischen Auslegung für den Tagbetrieb verwendet werden, d.h. pro Einheit (CO + 2 H₂) sind 165 kJ/mol aufzuwenden. Umgerechnet in ein typisches mittels beispielsweise FT-Reaktion (Fischer-Tropsch-Reaktion) gebildetes Paraffin sind das 13,75 MJ/kg(CH2). Legt man nun eine 1 MW-Solaranlage zu Grunde und minimiert Wärmeverluste beim Aufheizen der Ausgangsstoffe durch Wärmerückgewinnung, so ergibt sich eine Produktionsrate der gemischten Reformierung nach (5), die die Paraffin Produktion von 0,3 Tonnen pro Stunde erlaubt, was einer Jahresproduktion von ca. 2.700 Tonnen pro Jahr entspricht. Umgerechnet in eine Standardangabe zur Produktionskapazität von Treibstoffen bzw. Fördermengen von Erdöl sind dies 54 b/d (Barrel per day) pro MW Solarenergie.

Die Produktionskapazität von 54 b/d pro installierte MW Solarenergie erlaubt Gesamtproduktionsmengen von 2700 b/d im Falle eines 50 MW-Solarkraftwerks, was einer kleinen FT-Demonstrationsanlage entspricht. Im Fall eines 300 MW-Solarkraftwerks ergeben sich Produktionsmengen von 16.000 b/d, die nahe an im Bau befindliche FT-Produktionsanlagen heranreicht (Chevron-NPPC joint venture in Escravos, Nigeria: 34.000 b/d).

Im Falle der Reaktion nach (2) ergeben sich 43 b/d pro MW Solarenergie, nach Reaktion (1) sogar 72 b/d pro MW Solarenergie, wobei Reaktion (1) zu wenig Wasserstoff produziert. Auf Basis von Reaktion (2) kann ein Überschuss von Wasserstoff für den Nachtbetrieb erzeugt werden. Der Nachtbetrieb könnte jedoch auch durch autothermes Reforming (ATR) mittels Reaktion (3) realisiert werden. Eine Verwendung des tags erhaltenen Wasserstoffüberschusses in Kombination mit ATR könnte eine Anpassung zugeführter Sauerstoffmengen und eine zusätzliche Einsparung an in der ATR gebildetem Kohlendioxid erlauben, da ATR nicht ideal nach (3) läuft und teils mehr Methan verbrannt wird, was eine Abweichung vom idealen Synthesegasgemisch bedingt.

### Geeignete Solaranlagen:

Geeignete Solaranlagen, die Verbindung mit dem erfindungsgemäßen Verfahren eingesetzt werden können, sind Parabolspiegelanlagen, solarthermische Kraftwerke mit Bündelung von Direktstrahlung oder Solarfarmkraftwerke, die aus vielen parallel geschalteten Parabolrinnen- oder Fresnel-Kollektoren (den so genannten Linienkonzentratoren) bestehen. Es eignen sich auch Solarturmkraftwerke (Dampfkraftwerke mit solarer Dampferzeugung) sowie solarthermische Kraftwerke ohne Bündelung.

Beispielsweise kann mit einer Parabolspiegelanlage, deren Fangspiegelfläche 2835 m² beträgt und deren Fangspiegel mit einer Sonneneinstrahlung von 800 Watt pro m² Globalstrahlung bestrahlt wird, im Brennpunkt des Sonnenofens eine Leistung von 1,1 MW erreicht werden.

Mittels Solarturmkraftwerken, bei denen es sich zumeist um Dampfkraftwerke mit solarer Dampferzeugung handelt, können meist höhere Temperaturwerte und ein höherer thermodynamischer Wirkungsgrad erreicht werden als mittels Solarfarmkraftwerken. Die Temperaturen, die mittels Solarkraftwerken technisch sinnvoll handhabbar sind, liegen bei ca. 1300 °C. Das verwendete Wärmeträgermedium ist entweder flüssiges Nitratsalz, Wasserdampf oder Heißluft. Salzschmelzen, Metallschmelzen, Wasserdampf oder Heißluft werden auch bei Solarschmelzöfen genutzt. Auf diese Weise kann z.B. Prozesswärme nahezu beliebiger Temperatur generiert und zur Beschleunigung chemischer Prozesse genutzt werden. Solarthermische Kraftwerke ohne Bündelung haben keine nachgeführten Reflektoren, nutzen jedoch die gesamte einfallende Strahlung der Sonne (Globalstrahlung, also Direkt- und Diffusstrahlung).

## Patentansprüche

1. Verfahren zur Herstellung und Umsetzung von Synthesegas, das **dadurch gekennzeichnet ist, dass** es mehrere unterschiedliche Betriebszustände aufweist, die im wesentlichen aus dem im Wechsel zueinander stehenden
(i) Tagesbetrieb und
(ii) Nachtbetrieb bestehen,
wobei der Tagesbetrieb (i) hauptsächlich die trockene Reformierung und das Steamreforming unter der Zuführung von regenerativer Energie und der Nachtbetrieb (ii) hauptsächlich die partielle Oxidation von Kohlenwasserstoffen umfasst und wobei das Synthesegas zur Herstellung von Wertprodukten verwendet wird.

2. Verfahren nach Anspruch 1, das **dadurch gekennzeichnet ist, dass** es sich bei den für die trockene Reformierung, das Steamreforming und die partielle Oxidation eingesetzten Kohlenwasserstoffen um kurzkettige Kohlenwasserstoffverbindungen mit weniger als fünf Kohlenstoffatomen handelt.

3. Verfahren nach Anspruch 2, das **dadurch gekennzeichnet ist, dass** es sich bei den für die trockene Reformierung, das Steamreforming und die partielle Oxidation eingesetzten Kohlenwasserstoffe um Erdgas, Biogas oder ein anderes methanhaltiges Gas handelt, dessen Methangehalt höher als 70 vol.% ist.

4. Verfahren nach einem der zuvor genannten Ansprüche, das **dadurch gekennzeichnet ist, dass** das während der unterschiedlichen Betriebszustände hergestellte Synthesegas eine Gesamtzusammensetzung aufweist, in der das Verhältnis von Kohlenmonoxid zu Wasserstoff in einem Bereich von 0,2 bis 0,8 liegt.

5. Verfahren nach einem der zuvor genannten Ansprüche, das **dadurch gekennzeichnet ist, dass** das Synthesegas bezüglich des Verhältnisses von Kohlenmonoxid zu Wasserstoff eine Gesamtzusammensetzung von 1 zu 2 aufweist.

6. Verfahren nach einem der zuvor genannten Ansprüche, das **dadurch gekennzeichnet ist, dass** die einzelnen Verfahrensschritte trockene Reformierung, Steamreformierung und partielle Oxidation in unterschiedlichen Reaktoren durchgeführt werden.

7. Verfahren nach einem der Ansprüche 1 bis 5, das **dadurch gekennzeichnet ist, dass** zwei der drei Verfahrensschritte trockene Reformierung, Steamreformierung und partielle Oxidation in einem gemeinsamen Reaktor durchgeführt werden, wobei der gemeinsame Reaktor mit demjenigen Reaktor, in welchem der dritte Verfahrensschritt vorgenommen wird, seriell oder parallel geschaltet sind.

8. Verfahren nach einem der Ansprüche 1 bis 5, das **dadurch gekennzeichnet ist, dass** die Verfahrensschritte trockene Reformierung, Steamreformierung und partielle Oxidation in einem gemeinsamen Reaktor durchgeführt werden.

9. Verfahren nach einem der zuvor genannten Ansprüche, das **dadurch gekennzeichnet ist, dass** es sich bei der dem Prozess zugeführten Energie um solare Energie, Kernenergie, geothermale Energie, Windenergie oder Wasserkraft, wie Gezeitenkraft oder Kraft aus Wasserkraftwerken, handelt.

10. Verfahren nach einem der zuvor genannten Ansprüche, das **dadurch gekennzeichnet ist, dass** die dem Prozess während des Tagesbetriebes zugeführte Energie im Wesentlichen aus Solarenergie besteht.

11. Verfahren nach einem der zuvor genannten Ansprüche, das **dadurch gekennzeichnet ist, dass** es sich bei den beim Prozess hergestellten Wertprodukten um Dimethylether, Methanol, langkettige und/oder cyclische Kohlenwasserstoffe im Bereich von Ce bis C₆₀, Olefine und/oder Aromaten handelt.

## Claims

1. A process for preparing and converting synthesis gas, which has a plurality of different operating states which consist essentially of mutually alternating
(i) daytime operation and
(ii) nighttime operation,
daytime operation (i) comprising principally dry reforming and steam reforming with supply of renewable energy, and nighttime operation (ii) comprising principally the partial oxidation of hydrocarbons, and the synthesis gas being used to produce products of value.

2. The process according to claim 1, wherein the hydrocarbons used for the dry reforming, the steam reforming and the partial oxidation are short-chain hydrocarbon compounds having fewer than five carbon atoms.

3. The process according to claim 2, wherein the hydrocarbons used for the dry reforming, the steam reforming and the partial oxidation are natural gas, biogas or another methane-containing gas, whose methane content is higher than 70% by volume.

4. The process according to any one of the preceding claims, wherein the synthesis gas produced over the different operating states has an overall composition in which the ratio of carbon monoxide to hydrogen is within a range from 0.2 to 0.8.

5. The process according to any one of the preceding claims, wherein the synthesis gas, based on the ratio of carbon monoxide to hydrogen, has an overall composition of 1 to 2.

6. The process according to any one of the preceding claims, wherein the individual process steps of dry reforming, steam reforming and partial oxidation are performed in different reactors.

7. The process according to any one of claims 1 to 5, wherein two of the three process steps of dry reforming, steam reforming and partial oxidation are performed in a common reactor, said common reactor being connected in series or parallel with that reactor in which the third process step is undertaken.

8. The process according to any one of claims 1 to 5, wherein the process steps of dry reforming, steam reforming and partial oxidation are performed in a common reactor.

9. The process according to any one of the preceding claims, wherein the energy supplied to the operation is solar energy, nuclear energy, geothermal energy, wind energy or hydropower, such as tidal power or power from hydroelectric plants.

10. The process according to any one of the preceding claims, wherein the energy supplied to the operation during daytime operation consists essentially of solar energy.

11. The process according to any one of the preceding claims, wherein the products of value produced in the operation are dimethyl ether, methanol, long-chain and/or cyclic hydrocarbons in the range from C₆ to C₆₀, olefins and/or aromatics.

## Revendications

1. Procédé pour la préparation et la transformation de gaz de synthèse, **caractérisé en ce qu'**il présente plusieurs états de fonctionnement différents, qui sont essentiellement constitués par un fonctionnement, en alternance
(i) de jour et
(ii) de nuit
le fonctionnement de jour (i) comprenant principalement le reformage à sec et le reformage à la vapeur en alimentant de l'énergie renouvelable et le fonctionnement de nuit (ii) comprenant principalement l'oxydation partielle d'hydrocarbures et le gaz de synthèse étant utilisé pour la préparation de produits de valeur.

2. Procédé selon la revendication 1, **caractérisé en ce qu'**il s'agit, pour les hydrocarbures utilisés pour le reformage à sec, le reformage à la vapeur et l'oxydation partielle, de composés hydrocarbonés à courte chaîne, comprenant moins de cinq atomes de carbone.

3. Procédé selon la revendication 2, **caractérisé en ce qu'**il s'agit, pour les hydrocarbures utilisés pour le reformage à sec, le reformage à la vapeur et l'oxydation partielle, de gaz naturel, de biogaz ou d'un autre gaz contenant du méthane, dont la teneur en méthane est supérieure à 70% en volume.

4. Procédé selon l'une quelconque des revendications susmentionnées, **caractérisé en ce que** le gaz de synthèse préparé pendant les différents états de fonctionnement présente une composition totale dans laquelle le rapport de monoxyde de carbone à hydrogène se situe dans une plage de 0,2 à 0,8.

5. Procédé selon l'une quelconque des revendications susmentionnées, **caractérisé en ce que** le gaz de synthèse présente une composition totale de 1:2 en ce qui concerne le rapport de monoxyde de carbone à hydrogène.

6. Procédé selon l'une quelconque des revendications susmentionnées, **caractérisé en ce que** les différentes étapes de procédé, le reformage à sec, le reformage à la vapeur et l'oxydation partielle, sont réalisées dans des réacteurs différents.

7. Procédé selon l'une quelconque des revendications 1 à 5, **caractérisé en ce que** deux des trois étapes de procédé, le reformage à sec, le reformage à la vapeur et l'oxydation partielle, sont réalisées dans un réacteur commun, le réacteur commun étant commuté en série ou en parallèle avec le réacteur dans lequel la troisième étape de procédé est réalisée.

8. Procédé selon l'une quelconque des revendications 1 à 5, **caractérisé en ce que** les étapes de procédé, le reformage à sec, le reformage à la vapeur et l'oxydation partielle, sont réalisées dans un réacteur commun.

9. Procédé selon l'une quelconque des revendications susmentionnées, **caractérise en ce qu'**il s'agit, pour l'énergie alimentée dans le procédé, d'énergie solaire, d'énergie nucléaire, d'énergie géothermique, d'énergie éolienne ou d'énergie hydraulique, telle que l'énergie marémotrice ou de centrales hydrauliques.

10. Procédé selon l'une quelconque des revendications susmentionnées, **caractérisé en ce que** l'énergie alimentée pendant le fonctionnement de jour est essentiellement constituée d'énergie solaire.

11. Procédé selon l'une quelconque des revendications susmentionnées, **caractérisé en ce qu'**il s'agit, pour les produits de valeur préparés lors du procédé, de diméthyléther, de méthanol, d'hydrocarbures à longue chaîne et/ou cycliques dans la plage de C₆ à C₆₀, d'oléfines et/ou d'aromatiques.
